# EUROPEAN PATENT SPECIFICATION

(11) **EP 2 682 487 B1**
(45) Date of publication and mention of the grant of the patent: **13.07.2016**
(21) Application number: 12829796.7
(22) Date of filing: 17.08.2012
(51) Int. Cl.: C22B 30/04, C22B 30/02, C22B 7/02, C22B 7/04, C22B 19/30, C22B 13/00, C22B 25/00

(54) **COMPREHENSIVE RECOVERY METHOD FOR COMPLEX MATERIAL CONTAINING ARSENIC AND VALUABLE METAL SLAGS**
UMFASSENDES WIEDERHERSTELLUNGSVERFAHREN FÜR EIN KOMPLEXES MATERIAL MIT ARSEN UND EDELMETALLSCHLACKEN
PROCÉDÉ DE RÉCUPÉRATION COMPLÈTE POUR UNE MATIÈRE COMPLEXE COMPRENANT DES LAITIERS D'ARSENIC ET DE MÉTAUX DE VALEUR

(30) Priority: 05.09.2011 CN 201110260188
(43) Date of publication of application: 08.01.2014
(73) Proprietor: Leiyang Yanxin Non-ferrous Metals Co., Ltd, Leiyang, Hunan 421800 (CN)
(72) Inventor: SHI, Renzhang, Leiyang Hunan 421800 (CN); SHI, Hongjiao, Leiyang Hunan 421800 (CN); LIANG, Jinfeng, Leiyang Hunan 421800 (CN)
(74) Representative: Tischner, Oliver
(86) International application number: PCT/CN2012/080278
(87) International publication number: WO 2013/034049

(56) References cited:
- WO-A1-91/02824
- CN-A- 1 676 639
- CN-A- 101 928 843
- CN-A- 102 286 665
- GB-A- 2 188 943
- US-A- 2 401 001
- US-A- 4 212 666
- HELSEN ET AL: "Sampling technologies and air pollution control devices for gaseous and particulate arsenic: a review", ENVIRONMENTAL POLLUTION, BARKING, GB, vol. 137, no. 2, 1 September 2005 (2005-09-01), pages 305-315, XP027795458, ISSN: 0269-7491 [retrieved on 2005-09-01]

## Description

### Field of the Invention

The invention relates to a comprehensive recovery method of a complex material containing arsenic and valuable metal slags.

### Background of the Invention

At present, more attention have been paid to basic slags containing arsenic, produced in the antimony smelting industry in China, and some comprehensive recovery methods are proposed, for example, "pollution-free basic arsenic slag treatment method" disclosed in CN200410023055.0, "process for comprehensive recovery of valuable metals in antimony oxychloride slag" disclosed in CN200610048549.3, and "method for comprehensive recovery of basic arsenic slag and sulfur dioxide gas in pyrogenic process antimony smelting" disclosed in CN101899574.A. In the non-ferrous smelting industry, however, there are other processes producing slags containing arsenic, for example, sintering of jamesonite producing dust containing As₂O₃ 8-20%, Pb 10-15% and Sb 10-20%, reduction smelting of a lead anode slime reverberatory furnace producing dust containing As₂O₃ 10-30%, Pb 10-20%, Sb 5-15% and Ag 0.02-0.05%, smelting of a briquetting blowing volatilization furnace for lead oxide ore containing arsenic producing dust containing As₂O₃ 8-15%, Pb 20-40% and Sn 0.5-1.5%, basic oxidizing refinement of an alloy producing slag containing As₂O₃ 10-20%, Pb 20-30% and Sb 10-20%, and the like. There is a lack of systematic process research and reports thereof about the complex material containing arsenic and valuable metal slags in two aspects of environmental protection and resources.

Helsen et al. Environmental pollution, 137, 2, 1/09/2005, 305-315 reviews the sampling technologies and air pollution control devices for gazeous and particulate arsenic.

US 4, 212, 666 concerns the recovery of tin from a tin-bearing material.

### Summary of the Invention

The object of the invention is to provide a comprehensive recovery method of a complex material containing arsenic and valuable metal slags, which can change the slags containing arsenic from waste to a valuable thing, and simultaneously prevent new environmental pollution.

In order to achieve the object abovementioned of the invention, the comprehensive recovery method of the complex material containing arsenic and the valuable metal slags comprises the following steps:
(1) volatilizing and enriching arsenic through a primary rotating kiln: mixing 95-97 parts of various slags containing arsenic and 3-5 parts of reducing coal powder, then sending the mixture to the primary rotating kiln, controlling the lumpiness of the slag containing arsenic to be less than Φ20mm and the average arsenic content to be larger than 25% and controlling the furnace temperature of the primary rotating kiln at 600-800°C, with the resultant dust from the primary rotating kiln containing As₂O₃ 60-70%; collecting the dust from the primary rotating kiln by a bag; and sending the slag from the primary rotating kiln containing As₂O₃ 5-8%, to a blowing volatilization furnace to recover valuable metals;
(2) purifying arsenic through a secondary rotating kiln: sending 95-97 parts of the dust from the primary rotating kiln, which is obtained in the primary rotating kiln and 3-5 parts of reducing coal powder to a secondary rotating kiln, controlling the temperature of the secondary rotating kiln in sections, with the resultant dust from the secondary rotating kiln containing As₂O₃ above 99.5%; subjecting the dust from the secondary rotating kiln to bag collection to be packaged and sold as an arsenic product; and sending the resultant slag from the secondary rotating kiln to the blowing volatilization furnace together with the slag from the primary rotating kiln to recover the valuable metals;
(3) reduction smelting the slags from the primary and secondary rotating kilns in the blowing volatilization furnace: mixing the slags from the primary and secondary rotating kilns according to ferro-silicon calcium slag type, briquetting, and then sending the briquette to the blowing volatilization furnace; returning the resultant dust from the blowing furnace to the primary rotating kiln in step (1) for treatment; sending the resultant slags from the blowing furnace to a fuming volatilization furnace for treatment; and sending a resultant alloy containing arsenic to a basic oxidizing refinement furnace for treatment;
(4) performing strongly reductive dearsenization on residual arsenic in the slag from the blowing furnace and volatilizing valuable metal zinc in a fuming volatilization furnace: sending 70-74 parts of the slag from the blowing furnace and 26-30 parts of the reducing coal powder to the fuming volatilization furnace, and controlling the furnace temperature of the fuming volatilization furnace at 1200-1350°C, with the resultant dust from the fuming furnace containing As₂O₃ 3-6% and Zn above 40%, being sold as a raw material for zinc, and the resultant slag from the fuming furnace containing As₂O₃ <0.04%, being sold as a raw material in a cement manufactory;
(5) performing basic oxidizing refinement on a resultant alloy containing arsenic from the blowing volatilization furnace: sequentially sending 68-72 parts of the resultant alloy containing arsenic from the blowing volatilization furnace, 23-27 parts of NaOH and 3-7 parts of NaNO₃ to a smelting reverberatory furnace and a blowing reverberatory furnace for oxidizing refinement, with a resultant refined alloy containing As₂O₃ <0.02%, being sold as as an antimony-lead alloy, and the resultant slag from oxidizing refinement containing As₂O₃ 10-20%; and sending the slag from the oxidizing refinement furnace to a basic arsenic slag process for treatment; and
(6) performing basic arsenic slag treatment: performing crushing and water immersion on basic arsenic slags to dissolve arsenic as soluble sodium arsenate into a water solution and also dissolve valuable metal tin as soluble sodium stannate into the water solution, filtering, and then returning the water immersion slag to step (3) to recover the valuable metal; precipitating tin from a basic solution containing arsenic by blowing in CO₂, with the filtered slag of tin oxide being sold as a raw material for tin; and adding Ca(OH)₂ into the basic solution containing arsenic for dearsenization, returning the filtered slag of calcium arsenate to step (1) for treatment, and heating and evaporating the basic solution to recover sodium carbonate or sodium hydroxide. The main chemical reaction formulas involved in the process are as follows:

   AS₂O₅+C=As₂O₃+CO₂↑

   2As₂O₃+3C=4As+3CO₂↑

   2PbO+C=2Pb+CO₂↑

   2Sb₂O₃+3C=4Sb+3CO₂↑

   4NaOH=2Na₂O+2H₂O↑

   4As+5O₂+6Na₂O=4Na₃AsO₄

   2Na₃AsO₄+4Ca(OH)₂=Ca₃(AsO₄)₂·Ca(OH)₂↓+6NaOH

According to the invention, volatilization and enrichment of arsenic through the primary rotating kiln and the purification of arsenic through the secondary rotating kiln are sequentially performed on the various complex materials containing arsenic and valuable metal slags, so that an arsenic product containing As₂O₃ 99.5% can be produced, being sold as a product, other valuable metals are enriched in the slags from the primary and secondary rotating kilns, the slags from the primary and secondary rotating kilns can enter the blowing volatilization furnace for reduction smelting, the resultant highly arsenious dust is returned to the primary rotating kiln for treatment, the low arsenious slag is sold as a raw material in a cement manufactory and the raw material for zinc after strongly reductive dearsenization and volatilization of zinc in the fuming furnace, basic oxidizing refinement is performed on the resultant alloy containing arsenic, lead, antimony, bismuth, silver and the like in the alloy after dearsenization are recovered according to a conventional method, the refined basic slag contains As₂O₃ 5-15% and valuable metals about 5-15%, crushing, dissolution in basic solution and filtration are performed, the slags thereof are returned to the blowing volatilization furnace for treatment, tin is precipitated from a basic solution containing tin and arsenic by pumping in CO₂, filtered tin dioxide is taken as sold as a highly tinny raw material, Ca(OH)₂ is added into basic filtrate containing arsenic to precipitate arsenic, the filtered slag of calcium arsenate is returned to the primary rotating kiln for treatment, and the residual basic solution is evaporated to concentrate and recover base. The whole process flow is simple, clear and smooth. During the process, the content of produced arsenic oxide is larger than 99.5%, the comprehensive recovery rate of arsenic is larger than 98%, the content of As in the slag after fuming is less than 0.05%, and the recovery rates of other valuable metals are as follows: Sn≥90%, Pb≥96%, Sb≥90%, Bi≥92%, Zn≥85% and Ag≥96%, so that the economic benefits and the environmental benefits are very significant.

### Brief Description of the Drawings

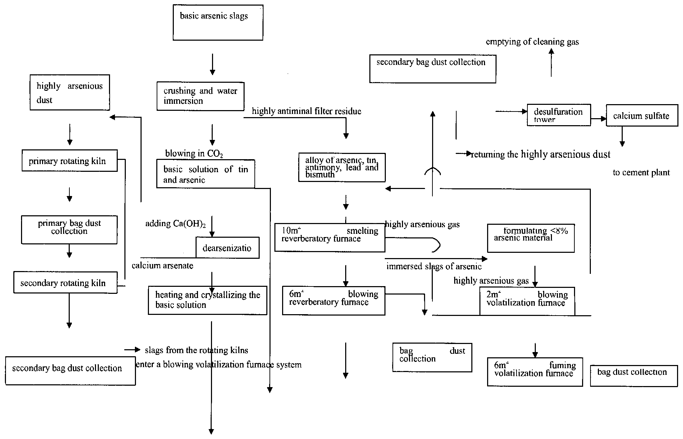

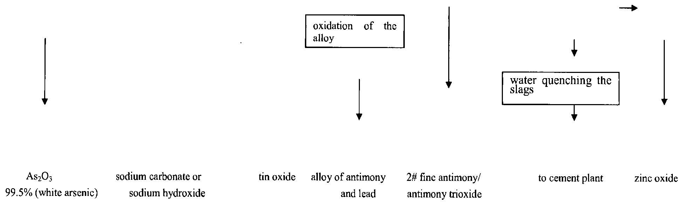

Fig. 1 is a process flow diagram of the invention.

### Detailed Description of the Embodiments

Hereinafter, the invention is further described in conjunction with the following embodiments.

As shown in Fig. 1, a comprehensive recovery method of a complex material containing arsenic and valuable metal slags, disclosed in the invention, comprises the following steps:
(1) volatilizing and enriching arsenic through a primary rotating kiln: sending 80 parts of highly arsenious dust containing As₂O₃ 40%, Pb 25%, Sb 5% and Bi 3%, 15 parts of dust from a blowing volatilization furnace containing As₂O₃ 30%, Pb 20%, Sb 8% and Bi 2% and 5 parts of anthracite powder containing solid carbon 80% to the primary rotating kiln, with the average content of As₂O₃ in the raw material containing arsenic in the furnace being 36.5%, the lumpiness being controlled to below Φ20mm, the effective size of the hearth of the primary rotating kiln being Φ1.6m×28m, the slope being controlled at 1: 25, the rotational speed being controlled at 4 revolutions/minute, the temperature of the kiln head being 750±50°C, the temperature of the kiln tail being 600±50°C, the resultant dust from the primary rotating kiln containing As₂O₃ 70%, the volatilization rate of arsenic achieving 80%, the resultant slag from the primary rotating kiln containing As₂O₃ 8%, and the yield being 70%;
(2) purifying arsenic through a secondary rotating kiln: sending 97 parts of dust from the primary rotating kiln containing As₂O₃ 70% and 3 parts of anthracite powder containing solid carbon 80% to the secondary rotating kiln, with the effective size of the hearth of the secondary rotating kiln being Φ1m×18m, the slope being 1: 25, the rotational speed being 3.5 revolutions/minute, the temperature of the kiln head being 700±10°C, the temperature of the kiln middle section being 650±20°C, the temperature of the kiln tail being 600±20°C, the produced dust from the secondary rotating kiln containing As₂O₃ 99.6%, the volatilization rate of arsenic being more than 75%, and the resultant slag from the secondary rotating kiln containing As₂O₃ 15%; and subjecting the dust from the secondary rotating kiln to bag collection to be package and sold as an arsenic product, and sending the resultant slag from the secondary rotating kiln to the blowing volatilization furnace together with the slag from the primary rotating kiln to recover valuable metals;
(3) reduction smelting the slags from the primary and secondary rotating kilns in a blowing volatilization furnace: briquetting 75 parts of slags from the primary and secondary rotating kilns and 8 parts of limestone to form a briquette containing As₂O₃ 6.5%, Pb 22%, Sb 4% and Bi 2.5%, and further sending the briquette to the 2m² blowing volatilization furnace together with 17 parts of reducing coke carbon, with the dust rate of the resultant dust from the blowing furnace being 8%, and the dust from the blowing furnace containing As₂O₃ 30%, Pb 20%, Sb 8% and Bi 2%; and returning the dust from the blowing furnace to the primary rotating kiln in step (1) for treatment, with the yield of the slag from the blowing furnace being 60%, and the slags containing As₂O₃ 1.5%; sending the slag from the blowing furnace to a fuming volatilization furnace for treatment; with the yield of an alloy containing arsenic being 32%, the alloy containing arsenic containing As 8%, Pb 67%, Sb 11% and Bi 7%; and sending the resultant alloy containing arsenic to a basic oxidizing refinement furnace for treatment;
(4) performing dearsenization on residual arsenic and volatilizing zinc in a fuming volatilization furnace: sending 72 parts of slag from the blowing furnace containing As₂O₃ 1.5% and Zn 8%, and 28 parts of reducing coal powder to the 2m² fuming volatilization furnace, controlling the furnace temperature of the fuming volatilization furnace at 1200-1350°C, with the resultant dust from the fuming furnace containing As₂O₃ 5%, Zn 40% and Pb 3%, being sold as a raw material for zinc, the dust rate in the step of performing dearsenization on residual arsenic and volatilizing zinc in the fuming volatilization furnace being 18%, and the resultant slag from the fuming furnace containing less than As₂O₃ 0.04%, being sold as a raw material in a cement manufactory;
(5) performing basic oxidizing refinement on a resultant alloy containing arsenic, tin, antimony, lead, bismuth and silver from the blowing volatilization furnace:
   sequentially sending 70 parts of an alloy containing arsenic containing As 8%, Pb 67%, Sb 11% and Bi 7%, 25 parts of NaOH and 5 parts of NaNO₃ to a reverberatory furnace for refinement, with a resultant oxidized/refined alloy containing As₂O₃ 0.001%, Pb 72%, Sb 12% and Bi 7.5%, the slag from oxidizing refinement containing As₂O₃ 15%, Pb 10%, Sb 1.5% and Bi 0.5%, the slag production rate being 38%, and the oxidized/refined alloy being sold as an alloy of antimony and lead; and sending the slag from the oxidizing refinement furnace to a basic arsenic slag process for treatment; and
(6) performing basic arsenic slag treatment: performing crushing and water immersion on basic arsenic slags while controlling the specific gravity of a solution at 1.1-1.2 to dissolve arsenic as soluble sodium arsenate into a water solution and also dissolve valuable metal tin as soluble sodium stannate into the water solution, filtering to obtain water immersion slag containing the valuable metal 28%, and then returning the water immersion slag to step (3) to recover the valuable metal; precipitating tin from a basic solution containing arsenic and tin by blowing in CO₂, with the filtered tin oxide slag containing tin 55%, which is taken as a tin raw material for sale; and adding Ca(OH)₂ into the basic solution containing arsenic for dearsenization, returning the filtered slags of calcium arsenate to step (1) for treatment, and heating and evaporating the basic solution to recover sodium carbonate or sodium hydroxide.

## Claims

1. A comprehensive recovery method of a complex material containing arsenic and valuable metal slags, comprising the following steps:
(1) volatilizing and enriching arsenic through a primary rotating kiln: sending 95-97 parts of various slags containing arsenic and 3-5 parts of reducing coal powder to the primary rotating kiln, controlling the lumpiness of the slag containing arsenic to be less than Φ20mm, the average arsenic content to be larger than 25% and the furnace temperature of the primary rotating kiln at 600-800°C, with the resultant dust from the primary rotating kiln containing As₂O₃ 60-70%, and collecting the dust from the primary rotating kiln by a bag; and sending the resultant slag from the primary rotating kiln containing As₂O₃ 5-8%, to a blowing volatilization furnace to recover valuable metals;
(2) purifying arsenic through a secondary rotating kiln: sending 95-97 parts of the dust from the primary rotating kiln, which is obtained in the primary rotating kiln and 3-5 parts of reducing coal powder to a secondary rotating kiln, controlling the temperature of the secondary rotating kiln in sections, with the resultant dust from the secondary rotating kiln containing As₂O₃ above 99.5%, subjecting the dust from the secondary rotating kiln to bag collection to be packaged and sold as an arsenic product, and sending the resultant slag from the secondary rotating kiln into the blowing volatilization furnace together with the slag from the primary rotating kiln to recover the valuable metals;
(3) reduction smelting the slags from the primary and secondary rotating kilns in a blowing volatilization furnace: mixing the slags from the primary and secondary rotating kilns according to a ferro-silicon calcium slag type, briquetting, and then sending the briquette into the blowing volatilization furnace, with the resultant dust from the blowing furnace being returned to the primary rotating kiln in step (1) for treatment; sending the resultant slag from the blowing furnace to a fuming volatilization furnace for treatment; and sending a resultant alloy containing arsenic being sent a basic oxidizing refinement furnace for treatment;
(4) performing strongly reductive dearsenization on residual arsenic in the slag from the blowing furnace and volatilizing valuable metal zinc in a fuming volatilization furnace:
sending 70-74 parts of the slag from the blowing furnace and 26-30 parts of reducing coal powder to the fuming volatilization furnace, and controlling the furnace temperature of the fuming volatilization furnace at 1200-1350°C, with the resultant dust from the fuming furnace containing As₂O₃ 3-6% and Zn above 40%, being sold as a raw material for zinc, and the resultant slag from the fuming furnace containing As₂O₃ <0.04%, being sold as a raw material in a cement manufactory;
(5) performing basic oxidizing refinement on a resultant alloy containing arsenic from the blowing volatilization furnace: sequentially sending 68-72 parts of the alloy containing arsenic from the blowing volatilization furnace, 23-27 parts of NaOH and 3-7 parts of NaNO₃ to a smelting reverberatory furnace and a blowing reverberatory furnace, with the resultant oxidized/refined alloy containing Pb >72% and Sb >12%, being sold as an alloy of antimony and lead, and the resultant oxidized/refined slag containing As₂O₃ 10-20%; and sending the slag from the oxidizing refinement furnace to a basic arsenic slag process for treatment; and
(6) performing basic arsenic slag treatment: performing crushing and water immersion on the basic arsenic slags to dissolve arsenic as soluble sodium arsenate into a water solution and also dissolve valuable metal tin as soluble sodium stannate into the water solution, filtering, and then returning the water immersion slag to step (3) to recover the valuable metal; precipitating tin from basic solution containing arsenic and tin by blowing in CO₂, with filtered slags of tin oxide being sold as a raw material for tin; and adding Ca(OH)₂ into the basic solution containing arsenic for dearsenization, returning the filtered slags of calcium arsenate to step (1) for treatment, and heating and evaporating the basic solution to recover sodium carbonate or sodium hydroxide.

## Patentansprüche

1. Umfassendes Rückgewinnungsverfahren für komplexes Material, das Arsen und Edelmetallschlacken enthält, das die folgenden Schritte umfasst:
(1) Verflüchtigen und Anreichern von Arsen durch einen primären Drehrohrofen:
Senden von 95 bis 97 Teilen diverser Schlacken, die Arsen enthalten, und 3 bis 5 Teilen reduzierenden Kohlepulvers zum primären Drehrohrofen, Kontrollieren, dass die Klumpigkeit der Schlacke, die Arsen enthält, weniger als ø 20 mm aufweist, dass der durchschnittliche Arsengehalt mehr als 25 % beträgt und die Ofentemperatur des primären Drehrohrofens bei 600 bis 800 °C liegt, wobei der entstehende Staub aus dem primären Drehrohrofen As₂O₃ zu 60 bis 70 % enthält, und Sammeln des Staubs aus dem primären Drehrohrofen durch einen Beutel; und Senden der entstehenden Schlacke aus dem primären Drehrohrofen, die As₂O₃ zu 5 bis 8 % enthält, an einen Blasverflüchtigungsofen, um Edelmetalle rückzugewinnen;
(2) Reinigen von Arsen durch einen sekundären Drehrohrofen: Senden von 95 bis 97 Teilen des Staubs aus dem primären Drehrohrofen, der im primären Drehrohrofen erhalten wird, und 3 bis 5 Teile reduzierenden Kohlepulvers an einen sekundären Drehrohrofen, Kontrollieren der Temperatur des sekundären Drehrohrofens in Abschnitten, wobei der entstehende Staub aus dem sekundären Drehrohrofen As₂O₃ zu mehr als 99,5 % enthält, Sammeln des Staubs aus dem sekundären Drehrohrofen mit einem Beutel, um diesen zu verpacken und als Arsenprodukt zu verkaufen, und Senden der entstehenden Schlacke aus dem sekundären Drehrohrofen in den Blasverflüchtigungsofen gemeinsam mit der Schlacke aus dem primären Drehrohrofen, um die Edelmetalle rückzugewinnen;
(3) Reduktionsschmelzen der Schlacken aus dem primären und dem sekundären Drehrohrofen in einem Blasverflüchtigungsofen: Mischen der Schlacken aus dem primären und dem sekundären Drehrohrofen gemäß einem Eisensiliciumcalciumschlackentyp, Brikettieren und danach Senden des Briketts in den Blasverflüchtigungsofen, wobei der entstehende Staub aus dem Blasofen zum Behandeln zurück zum primären Drehrohrofen von Schritt (1) geführt wird; Senden der entstehenden Schlacke aus dem Blasofen zu zur Behandlung an einen Fuming-Verflüchtigungsofen; und Senden einer entstehenden Legierung, die Arsen enthält, die gesendet wird, zur Behandlung an einen Oxidationsverfeinerungsofen;
(4) Durchführen einer stark reduzierenden Entarsenisierung an dem restlichen Arsen in der Schlacke aus dem Blasofen und Verflüchtigen des Edelmetalls Zink in einem Fuming-Verflüchtigungsofen: Senden von 70 bis 74 Teilen der Schlacke aus dem Blasofen und 26 bis 30 Teilen reduzierenden Kohlepulvers an den Fuming-Verflüchtigungsofen und Kontrollieren der Ofentemperatur des Fuming-Verflüchtigungsofens auf 1200 bis 1350 °C, wobei der entstehende Staub aus dem Fuming-Ofen As₂O₃ zu 3 bis 6 % und Zn zu mehr als 40 % enthält, der als Rohmaterial für Zink verkauft wird, und die entstehende Schlacke aus dem Fuming-Ofen As₂O₃ zu < 0,04 % enthält, die als Rohmaterial in einer Zementfabrik verkauft wird;
(5) Durchführen einer basischen Oxidationsverfeinerung an einer entstehenden Legierung, die Arsen enthält, aus dem Blasverflüchtigungsofen: sequentielles Senden von 68 bis 72 Teilen der Legierung, die Arsen enthält, aus dem Blasverflüchtigungsofen, 23 bis 27 Teilen NaOH und 3 bis 7 Teilen NaNO₃ an einen Schmelzflammofen und einen Blasflammofen, wobei die entstehende oxidierte/verfeinerte Legierung Pb zu > 72 % und Sb zu > 12 % enthält, die als Legierung von Antimon und Blei verkauft wird, und die entstehende oxidierte/verfeinerte Schlacke As₂O₃ zu 10 bis 20 % enthält; und Senden der Schlacke aus dem Oxidationsverfeinerungsofen zur Behandlung an einen basischen Arsenschlackeprozess; und
(6) Durchführen einer basischen Arsenschlackenbehandlung: Zerkleinern der basischen Arsenschlacken und Eintauchen in Wasser, um Arsen als lösliches Natriumarsenat in eine Wasserlösung aufzulösen und auch das Edelmetall Zinn als lösliches Natriumstannat in die Wasserlösung aufzulösen, Filtern und danach Rückführen der Wassertauchschlacke zu Schritt (3), um das Edelmetall rückzugewinnen; Fällen von Zinn aus der basischen Lösung, die Arsen und Zinn enthält, durch Blasen in CO₂, wobei filtrierte Schlacken von Zinnoxid als Rohmaterial für Zinn verkauft werden; und Hinzufügen von Ca(OH)₂ in die basische Lösung, die Arsen enthält, für eine Entarsenisierung, Rückführen der filtrierten Schlacken von Calciumarsenat für eine Behandlung zu Schritt (1) und Erhitzen und Verdampfen der basischen Lösung, um Natriumcarbonat oder Natriumhydroxid rückzugewinnen.

## Revendications

1. Procédé de récupération complète d'un matériau complexe contenant des laitiers d'arsenic et de métaux de valeur, comprenant les étapes suivantes :
(1) volatilisation et enrichissement de l'arsenic dans un four de cuisson rotatif primaire : envoi de 95 à 97 parties de divers laitiers contenant de l'arsenic et de 3 à 5 parties de poudre de charbon réducteur dans le four de cuisson rotatif primaire, régulation de la formation d'agglomérats dans le laitier contenant de l'arsenic à une valeur inférieure à Φ20mm, de la teneur moyenne en arsenic à une valeur supérieure à 25 % et de la température de four du four de cuisson rotatif primaire à une valeur de 600 à 800°C, la poussière résultante provenant du four de cuisson rotatif primaire contenant de l'As₂O₃ de 60 à 70 %, et collecte de la poussière provenant du four de cuisson rotatif primaire dans un sac ; et envoi du laitier résultant provenant du four de cuisson rotatif primaire contenant de l'As₂O₃ de 5 à 8 %, dans un four de volatilisation soufflant pour récupérer les métaux de valeur ;
(2) purification de l'arsenic dans un four de cuisson rotatif secondaire : envoi de 95 à 97 parties de la poussière provenant du four de cuisson rotatif primaire, qui est obtenue dans le four de cuisson rotatif primaire et de 3 à 5 parties de poudre de charbon réducteur dans un four de cuisson rotatif secondaire, régulation de la température du four de cuisson rotatif secondaire par zones, la poussière résultante provenant du four de cuisson rotatif secondaire contenant de l'As₂O₃ à plus de 99,5 %, exposition de la poussière provenant du four de cuisson rotatif secondaire à une collecte dans des sacs en vue de son conditionnement et de sa vente en tant que produit à base d'arsenic, et envoi du laitier résultant provenant du four de cuisson rotatif secondaire dans le four de volatilisation soufflant conjointement avec le laitier provenant du four de cuisson rotatif primaire pour récupérer les métaux de valeur ;
(3) fusion réductrice des laitiers provenant des fours de cuisson rotatifs primaire et secondaire dans un four de volatilisation soufflant : mélange des laitiers provenant des fours de cuisson rotatifs primaire et secondaire en un laitier de type ferro-silico-calcium, briquetage, puis envoi de la briquette dans le four de volatilisation soufflant, la poussière résultante provenant du four soufflant étant renvoyée dans le four de cuisson rotatif primaire à l'étape (1) en vue du traitement ; envoi du laitier résultant provenant du four soufflant dans un four de volatilisation par fumigation en vue du traitement ; et envoi d'un alliage résultant contenant de l'arsenic dans un four de raffinage oxydant basique en vue du traitement ;
(4) réalisation d'une désarsénisation fortement réductrice de l'arsenic résiduel du laitier provenant du four soufflant et volatilisation du zinc métallique de valeur dans un four de volatilisation par fumigation :
envoi de 70 à 74 parties du laitier provenant du four soufflant et de 26 à 30 parties de poudre de charbon réducteur dans le four de volatilisation par fumigation, et régulation de la température de four du four de volatilisation par fumigation à une valeur de 1 200 à 1 350°C, la poussière résultante provenant du four à fumigation, contenant de l'As₂O₃ de 3 à 6 % et du Zn à plus de 40 %, étant vendue en tant que matière première pour zinc, et le laitier résultant provenant du four à fumigation, contenant de l'As₂O₃ dans une quantité < 0,04 %, étant vendu en tant que matière première dans une cimenterie ;
(5) réalisation d'un raffinage oxydant basique d'un alliage résultant contenant de l'arsenic provenant du four de volatilisation soufflant : envoi séquentiel de 68 à 72 parties de l'alliage contenant de l'arsenic provenant du four de volatilisation soufflant, de 23 à 27 parties de NaOH et de 3 à 7 parties de NaNO₃ dans un four à réverbère de fusion et un four à réverbère soufflant, l'alliage oxydé/raffiné résultant, contenant du Pb > 72 % et du Sb > 12 %, étant vendu en tant qu'alliage d'antimoine et de plomb, et le laitier oxydé/raffiné résultant contenant de l'As₂O₃ de 10 à 20 % ; et envoi du laitier provenant du four de raffinage oxydant dans un procédé pour laitier contenant de l'arsenic basique en vue du traitement ; et
(6) réalisation d'un traitement du laitier contenant de l'arsenic basique : réalisation d'un broyage et d'une immersion dans l'eau des laitiers contenant de l'arsenic basique pour dissoudre l'arsenic sous la forme d'arsénate de sodium soluble dans une solution aqueuse et également pour dissoudre l'étain métallique de valeur sous la forme de stannate de sodium soluble dans la solution aqueuse, filtration, puis renvoi du laitier ayant été soumis à une immersion dans l'eau à l'étape (3) pour récupérer le métal de valeur ; précipitation d'étain à partir de la solution basique contenant de l'arsenic et de l'étain par insufflation de CO₂, les laitiers filtrés d'oxyde d'étain étant vendus en tant que matière première pour étain ; et addition de Ca(OH)₂ dans la solution basique contenant de l'arsenic en vue de la désarsénisation, renvoi des laitiers filtrés d'arsénate de calcium à l'étape (1) en vue du traitement, et chauffage et évaporation de la solution basique pour récupérer du carbonate de sodium ou de l'hydroxyde de sodium.
